# EUROPEAN PATENT SPECIFICATION

(11) **EP 1 992 176 B1**
(45) Date of publication and mention of the grant of the patent: **04.09.2013**
(21) Application number: 06785596.5
(22) Date of filing: 26.06.2006
(51) Int. Cl.: G08C 17/00, H04L 29/08, G06F 3/12, H04L 12/28, H04W 4/00

(54) **METHODS AND APPARATUSES FOR SELECTIVELY CONTROLLING A REMOTE DEVICE**
VERFAHREN UND VORRICHTUNGEN ZUM SELEKTIVEN STEUERN EINER ENTFERNTEN EINRICHTUNG
PROCEDES ET APPAREILS PERMETTANT DE COMMANDER SELECTIVEMENT UN DISPOSITIF ELOIGNE

(30) Priority: 29.06.2005 US 171573
(43) Date of publication of application: 19.11.2008
(73) Proprietor: Webex Communications, Inc., Santa Clara, CA 95054 (US)
(72) Inventor: YUAN, Eric, Santa Clara, CA 95054 (US)
(74) Representative: Kazi, Ilya
(86) International application number: PCT/US2006/024856
(87) International publication number: WO 2007/005384

(56) References cited:
- EP-A2- 1 107 510
- US-A- 5 430 719
- US-A- 5 708 780
- US-A- 6 023 730
- US-A1- 2001 034 852
- US-A1- 2003 048 292
- US-A1- 2004 210 791
- US-A1- 2005 086 332
- US-A1- 2005 138 192
- US-B2- 6 788 933

## Description

### FIELD OF INVENTION

The present invention relates generally to controlling a remote device and, more particularly, to selectively controlling a remote device.

### BACKGROUND

Systems to control a remote device located in a different location are utilized by many people. In controlling the remote device from a different location, a user is able to perform tasks on the remote device such as perform modifications to the remote device, view content accessible on the remote device, and the like without having physical access to the remote device.
US 2004/0210791 discloses a network management system. A management program is executed by the management system connected to computers and to a plurality of storage devices for managing the volumes connected to the computers through a storage area network. The management program executes a procedure for receiving a notice of fault in the volume from the storage devices, a procedure for receiving volume access control information from a plurality of storage devices for specifying the computers that can access the volumes, and a procedure for notifying the fault in the volume to the computers that are permitted to access the volumes based on the volume access control information.

It would be desirable to provide a way to improve the access to a selected remote device based on assigned rights.

### SUMMARY

The present invention provides the method and system defined in the appended claims.

### BRIEF DESCRIPTION OF THE DRAWINGS

The accompanying drawings, which are incorporated in and constitute a part of this specification, illustrate and explain one embodiment of the methods and apparatuses for selectively controlling a remote device.

In the drawings,

Figure 1 is a diagram illustrating an environment within which the methods and apparatuses for selectively controlling a remote device are implemented;

Figure 2 is a simplified block diagram illustrating one embodiment in which the methods and apparatuses for selectively controlling a remote device are implemented;

Figure 3 is a simplified block diagram illustrating a system, consistent with one embodiment of the methods and apparatuses selectively controlling a remote device;

Figure 4 is an exemplary record for use with the methods and apparatuses for selectively controlling a remote device;

Figure 5 is a flow diagram consistent with one embodiment of the methods and apparatuses for selectively controlling a remote device; and

Figure 6 is a flow diagram consistent with one embodiment of the methods and apparatuses for selectively controlling a remote device.

### DETAILED DESCRIPTION

The following detailed description of the methods and apparatuses for selectively controlling a remote device refers to the accompanying drawings. The detailed description is not intended to limit the methods and apparatuses for selectively controlling a remote device. Instead, the scope of the methods and apparatuses for selectively controlling a remote device is defined by the appended claims and equivalents. Those skilled in the art will recognize that many other implementations are possible, consistent with the present invention.

References to a device include a desktop computer, a portable computer, a personal digital assistant, a video phone, a landline telephone, a cellular telephone, and a device capable of receiving/transmitting an electronic signal.

In one embodiment, the methods and apparatuses for selectively controlling a remote device allow a user to view a list of devices. Further, the user is capable of selectively accessing these listed devices. In one embodiment, the user is associated with a corresponding profile that identifies the devices within the list. Further, the status of each of the listed devices is shown.

In one embodiment, the listed devices have a profile associated with each device. In one embodiment, each of the devices have restrictions on the user accessing the device. In one embodiment, there are assigned rights that restrict the type of access that is allowed by the device. In another embodiment, access to the device is restricted by other factors such as the identity of the user, the particular device that the user utilizes to gain access, the number of times the user gains access, and the duration that the user accesses the device.

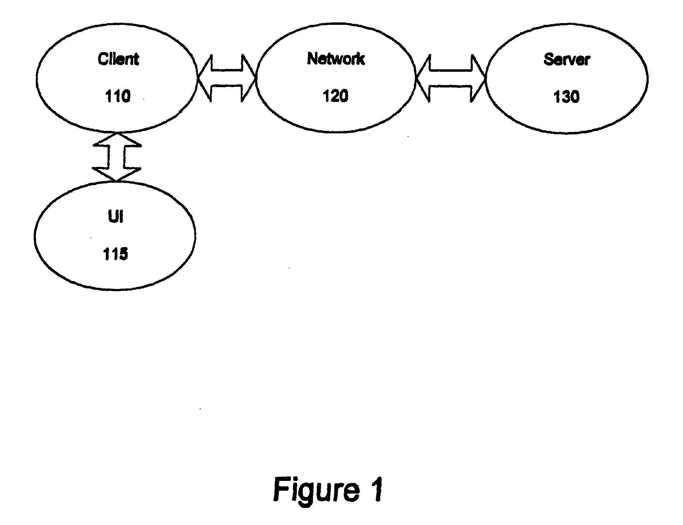

Figure 1 is a diagram illustrating an environment within which the methods and apparatuses for selectively controlling a remote device are implemented. The environment includes an electronic device 110 (e.g., a computing platform configured to act as a client device, such as a computer, a personal digital assistant, and the like), a user interface 115, a network 120 (e.g., a local area network, a home network, the Internet), and a server 130 (e.g., a computing platform configured to act as a server).

In one embodiment, one or more user interface 115 components are made integral with the electronic device 110 (e.g., keypad and video display screen input and output interfaces in the same housing such as a personal digital assistant. In other embodiments, one or more user interface 115 components (e.g., a keyboard, a pointing device such as a mouse, a trackball, etc.), a microphone, a speaker, a display, a camera are physically separate from, and are conventionally coupled to, electronic device 110. In one embodiment, the user utilizes interface 115 to access and control content and applications stored in electronic device 110, server 130, or a remote storage device (not shown) coupled via network 120.

In accordance with the invention, embodiments of selectively controlling a remote device below are executed by an electronic processor in electronic device 110, in server 130, or by processors in electronic device 110 and in server 130 acting together. Server 130 is illustrated in Figure 1 as being a single computing platform, but in other instances are two or more interconnected computing platforms that act as a server.

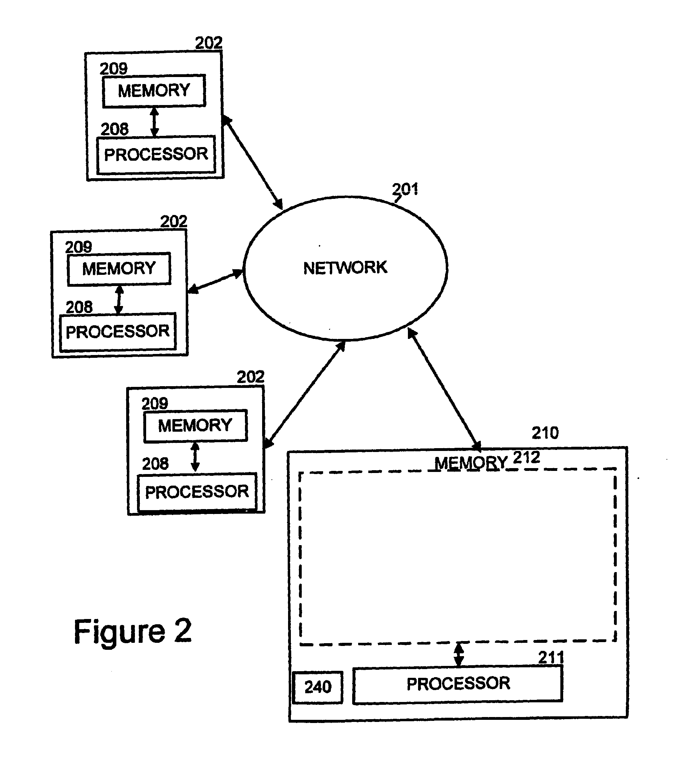

Figure 2 is a simplified diagram illustrating an exemplary architecture in which the methods and apparatuses for selectively controlling a remote device are implemented. The exemplary architecture includes a plurality of electronic devices 202, a server device 210, and a network 201 connecting electronic devices 202 to server 210 and each electronic device 202 to each other. The plurality of electronic devices 202 are each configured to include a computer-readable medium 209, such as random access memory, coupled to an electronic processor 208. Processor 208 executes program instructions stored in the computer-readable medium 209. In one embodiment, a unique user operates each electronic device 202 via an interface 115 as described with reference to Figure 1.

The server device 130 includes a processor 211 coupled to a computer-readable medium 212. In one embodiment, the server device 130 is coupled to one or more additional external or internal devices, such as, without limitation, a secondary data storage element, such as database 240.

In one instance, processors 208 and 211 are manufactured by Intel Corporation, of Santa Clara, California. In other instances, other microprocessors are used.

In one embodiment, the plurality of client devices 202 and the server 210 include instructions for a customized application for communicating between messaging and telephony systems. In one embodiment, the plurality of computer-readable media 209 and 212 contain, in part, the customized application. Additionally, the plurality of client devices 202 and the server 210 are configured to receive and transmit electronic messages for use with the customized application. Similarly, the network 210 is configured to transmit electronic messages for use with the customized application.

One or more user applications are stored in media 209, in media 212, or a single user application is stored in part in one media 209 and in part in media 212. In one instance, a stored user application, regardless of storage location, is made customizable based on selectively controlling a remote device as determined using embodiments described below.

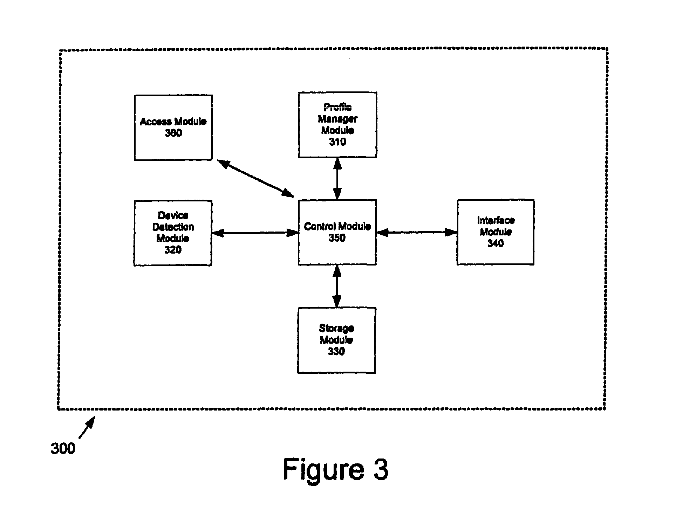

Figure 3 illustrates one embodiment of a system 300. In one embodiment, the system 300 is embodied within the server 130. In another embodiment, the system 300 is embodied within the electronic device 110. in yet another embodiment, the system 300 is embodied within both the electronic device 110 and the server 130.

In one embodiment, the system 300 includes a profile manager module 310, a device detection module 320, a storage module 330, an interface module 340, a control module 350, and an access module 360.

In one embodiment, the control module 350 communicates with the profile manager module 310, the device detection module 320, the storage module 330, the interface module 340, the control module 350, and the access module 360. In one embodiment, the control module 350 coordinates tasks, requests, and communications between the profile manager module 310, the device detection module 320, the storage module 330, the interface module 340, the control module 350, and the access module 360.

In one embodiment, the profile manager module 310 organizes and tracks the profiles. In one embodiment, each profile corresponds to a device. In another embodiment, each profile corresponds with a user.

In one embodiment, the device detection module 320 detects and identifies the identity of the devices. In one embodiment, the device detection module 320 detects the identity of devices that are coupled to a network such as an intranet, the Internet, a LAN, a WAN, and the like. The network may include both wired and wireless networks.

In another embodiment, the device detection module 320 also detects the status of the device. A device status includes being available, busy, logged off, and the like.

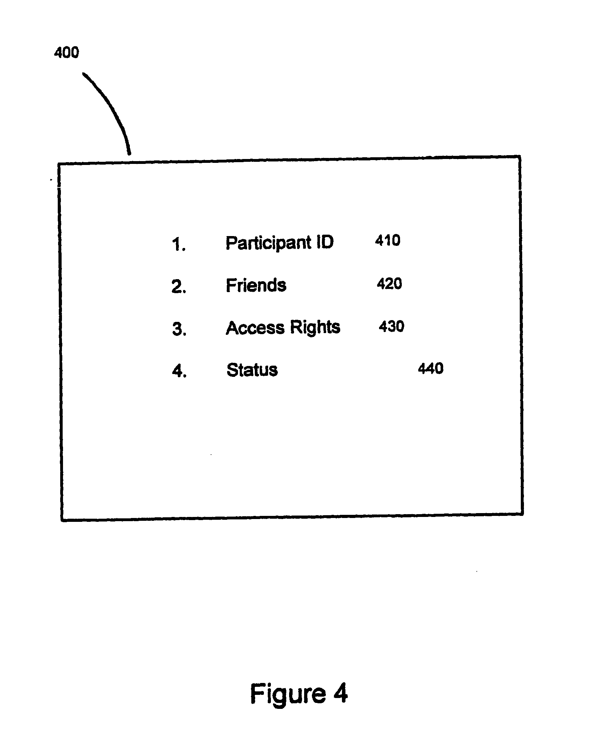

In one embodiment, the storage module 330 stores a record including a profile associated with the each device and/or user. An exemplary profile is shown in a record 400 within Figure 4.

In one embodiment, the interface module 340 detects input from a user. For example, when a user signs into a profile, the interface module 340 recognizes "friends" or "buddies" of the user from the profile.

In one embodiment, the access module 360 monitors the input from the user through the interface module and selectively allows the user to access other devices based on the profile associated with the user and the profile associated with each device accessed by the user.

The system 300 in Figure 3 is shown for exemplary purposes and is merely one embodiment of the methods and apparatuses for selectively controlling a remote device. Additional modules may be added to the system 300 without departing from the scope of the methods and apparatuses for selectively controlling a remote device. Similarly, modules may be combined or deleted without departing from the scope of the methods and apparatuses for selectively controlling a remote device.

Figure 4 illustrates an exemplary record 400 for use with the methods and apparatuses for selectively controlling a remote device. In one embodiment, the record 400 illustrates an exemplary record associated with the initiation and participation of a user with a remote device.

In one embodiment, there are multiple records such that each record 400 is associated with a particular user. Further, each user may correspond with multiple records wherein each record 400 is associated with a particular profile associated with the user. In one embodiment, each record 400 is also associated with a particular device.

In one embodiment, the record 400 includes a participant identification field 410, a friends field 420, an access rights field 430, and a status field 440. In one embodiment, the record 400 resides within the client 110. In another embodiment, the record 400 resides within the server 130.

In one embodiment, the participant identification field 410 includes information related to the identity of the user. In one embodiment, the participant identification field 410 comprises an IM identifier associated with the user.

In another embodiment, the participant identification field 410 includes information related to the identity of the device. In one embodiment, the participant identification field 410 comprises a serial number associated with the device.

In one embodiment, the friends field 420 includes a listing of friends or buddies that is associated with the particular profile. For example, if the profile is associated with a particular user, then the listing of friends indicates devices or other users that are associated with the particular user. In some instances, these devices and/or users have allowed the particular user to have access to and control over corresponding devices.

For example, if the profile is associated with a particular device, then the listing of friends indicates devices or other users that are associated with the particular device. In some instances, these devices and/or users have allowed the particular device to have access to and control over corresponding devices.

In one embodiment, the devices listed within the friends field 420 are incorporated within a device list. In one embodiment, this device list represents devices that are available to another device.

In one embodiment, the access rights field 430 designates the type of access and control the user or device associated with the profile has for respective devices associated with the friends field 420.

In one embodiment, the type of access and control rights include viewing content, downloading content, changing configurations, deleting content, adding content, deleting applications, adding applications, modifying applications, and the like.

In one embodiment, the status field 440 allows a particular device or particular user that is listed within the friends field 420 to have a current status associated with that entity. For example, the status is detected through the device detection module 320. The status includes being available, busy, in a meeting, out to lunch, away from my desk, idle, unavailable, and the like.

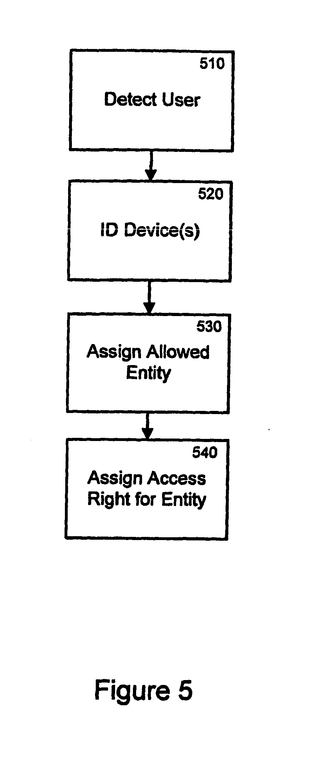

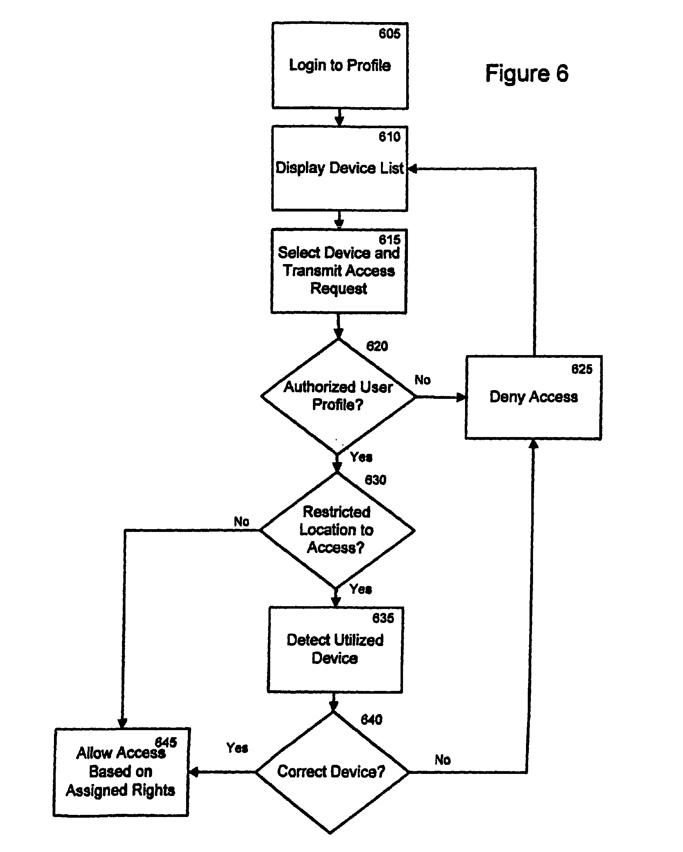

The flow diagrams as depicted in Figures 5 and 6 are one embodiment of the methods and apparatuses for selectively controlling a remote device. The blocks within the flow diagrams can be performed in a different sequence without departing from the scope of the methods and apparatuses for communicating between messaging and telephony systems. Further, blocks can be deleted, added, or combined without departing from the scope of the methods and apparatuses for selectively controlling a remote device.

The flow diagram in Figure 5 illustrates forming a profile associated with a user according to one embodiment of the invention.

In Block 510, a user is detected. In one embodiment, the user is identified through a login identification that uniquely identifies that individual user. In another embodiment, the user utilizes a password in conjunction with the login identification to authenticate the user as an authorized party.

In one embodiment, a profile is associated with the user. An exemplary profile is shown as the record 400 in Figure 4.

In Block 520, a device is identified that is associated with the profile corresponding to the user. In one embodiment, the device is uniquely identified by a descriptive name of the device such as "Dan's computer", "Laptop computer", and the like. In another embodiment, the device is uniquely identified by a unique serial number associated with the device. For example, the device may already have a unique serial number assigned at the factory that uniquely identifies that particular device.

In one embodiment, the user has control of the identified device and is able to customize the parties that can access this identified device and limit the type of access to this identified device. For example, the identified device is owned by the user.

In another embodiment, the user has no control of the identified device and utilizes the profile to request access permission from the owner of the identified device.

In Block 530, an entity is assigned access to the identified device referenced in the Block 520. In one embodiment, this entity is a different profile that corresponds to a different user. In another embodiment, this entity is a different profile that corresponds to the same user.

In one embodiment, the entity represents a user that is given access to the identified device when the user owns the identified device. In another embodiment, the entity represents a user that is being asked to give access permission to the user to access the identified device. (more here to explain this relationship)

In Block 540, access rights are assigned to the identified device. In one embodiment, the access rights include viewing content stored on the identified device, downloading content stored on the identified device, modifying content stored on the identified device, deleting content stored on the identified device, adding content onto the identified device, utilizing applications stored on the identified device, downloading applications stored on the identified device, modifying applications stored on the identified device, deleting applications stored on the identified device, and adding applications onto the identified device. In one embodiment, any of these access rights can be assigned to the identified device. Further, particular content and/or applications can be specified to be accessible.

In one embodiment, the access rights are limited based on the number of times the identified device is accessed. For example, the access rights to the identified device are limited to being accessed a predetermined number of times prior to making the identified device inaccessible. In another embodiment, the access rights are limited based on elapsed time. For example; the access rights to the identified device are limited by a predetermined amount of time prior to rendering the identified device inaccessible.

The flow diagram in Figure 6 illustrates accessing a device according to one embodiment of the invention.

In Block 605, a user accesses a user profile associated with the user. In one embodiment, the user identifies the user profile through a login identification. Further, the user authenticates authorization to the user profile by providing a predetermined password associated with the user profile. In one embodiment, the user may be associated with multiple user profiles.

In Block 610, a device list is displayed. In one embodiment, the device list includes devices that are available to be viewed by the user through the user profile.

In one embodiment, the status of the devices is shown through the device list and represents whether each device is available, unavailable, and the like. In another embodiment, the access rights of each device are also shown through the device list.

In one embodiment, the device list is formatted as a textual list that identifies the identity of the device, the status of each of these device, and the access rights associated with each device.

In another embodiment, the device list is embodied within a graphical user interface that utilizes icons to graphically represent each device shown on the device list, the status of each of these devices, and the access rights associated with each device.

In Block 615, a selected device shown within the device list is selected and an access request is transmitted. In one embodiment, the user associated with the profile chooses the selected device. Further, the user associated with the profile transmits the access request to gain access to the selected device.

In Block 620, a determination is made regarding whether the profile associated with the user is authorized to access the selected device. In one embodiment, a check is performed to ensure that the profile associated with the user is authorized to access the selected device. In one embodiment, the selected device includes an associated profile that lists the authorized profiles that are allowed to access this selected device.

In one embodiment, the user is asked to verify the passwords associated with the profile prior to gaining access to the selected device.

If the profile associated with the user is not authorized to access the selected device, then access to the selected device is denied in Block 625. In one embodiment, when access is denied to the selected device, information is not exchanged between the user associated with the profile and the selected device.

After access is denied in the Block 625, the device list is displayed in the Block 610.

If the profile associated with the user is authorized to access the selected device, then access that is restricted based on the location of the user associated with the profile is checked in Block 630.

It access to the selected device is not restricted based on the location of the user associated with the profile, then access to the selected device is granted to the user in Block 645. In one embodiment, access to the selected device by the user is restricted based on the assigned rights for the particular user and the selected device. In one embodiment, the selected device includes a profile that describes the access rights assigned to particular profiles.

If access to the selected device is restricted based on the location of the user associated with the profile, then the device utilized by the user is detected in Block 635. In one embodiment, the identity of the device utilized by the user is identified through a unique serial number associated with each device.

In one embodiment, the selected device includes a profile that describes the devices that are allowed to access the selected device. For example, in addition to restricting access to the selected device based on the user and the corresponding profile, the selected device may also limit access to the selected device from other predetermined devices. In this case, if the authorized user through the corresponding profile attempts to access the selected device through an unauthorized device, then access to the selected device is denied.

In Block 640, if the device is authorized to access the selected device, then access is allowed based on the assigned rights in the Block 645. If the device is not authorized to access the selected device, then access is denied by the Block 625.

The foregoing descriptions of specific embodiments of the invention have been presented for purposes of illustration and description. The invention may be applied to a variety of other applications.

They are not intended to be exhaustive or to limit the invention to the precise embodiments disclosed, and naturally many modifications and variations are possible in light of the above teaching. The embodiments were chosen and described in order to explain the principles of the invention and its practical application, to thereby enable others skilled in the art to best utilize the invention and various embodiments with various modifications as are suited to the particular use contemplated. It is intended that the scope of the invention be defined by the Claims appended hereto and their equivalents.

## Claims

1. A system, comprising:
a profile manager module (310) configured to track profiles, including device profiles and user profiles that include assigned access rights (420) that indicate what access a user has to the devices and authorized devices the user may utilize when accessing a respective device;
an access module (360) configured to selectively control access to a selected device by a user using a viewing computer, based on the assigned access rights (420) for the selected device; and
an interface module (340) configured to display a representation of the selected device along with a status of the selected device on the viewing computer,
wherein the access module (360) is also configured to restrict access by the viewing computer to the selected device based on a determination of whether the user of the viewing computer is authorized to access the selected device and a determination of whether the viewing computer used by the user is an authorized device according to the assigned access rights (420).

2. The system according to Claim 1 further comprising a storage module (330) configured to store the profile.

3. The system according to Claim 1 further comprising a device detection module (320) configured to detect the status of the selected device.

4. The system according to Claim 1 where the assigned access rights (430) include one of viewing content stored on the selected device, downloading content stored on the selected device, modifying content stored on the selected device, deleting content stored on the selected device, or adding content onto the selected device.

5. The system according to Claim 1 where the assigned access rights (430) include one of downloading applications stored on the selected device, modifying applications stored on the selected device, deleting applications stored on the selected device, or adding applications onto the selected device.

6. The system according to Claim 1 wherein the access module (360) is configured to restrict access to the selected device based on a predetermined amount of time.

7. The system according to Claim 1 wherein the access module (360) is configured to restrict access to the selected device based on a predetermined number of times the device is accessed.

8. A method comprising:
accessing (605) a profile of a user of a viewing computer to obtain from the profile a list of friends of the user of the viewing computer, and to obtain from the profile a list of a plurality of computers, each computer of the list of the plurality of computers being a computer of a respective friend who has allowed the user of the viewing computer to have at least some access to the computer;
displaying (610) the list of the plurality of devices that was obtained from the profile to the user of the viewing computer;
receiving (615) a selection of a selected device from the list of the plurality of devices that was obtained from the user profile;
accessing assigned access rights (430) for the selected device, wherein the assigned access rights include an indication of users allowed to access the selected device and authorized devices the users may utilize;
determining (620) that the user of the viewing computer is authorized to access the selected device;
in response to determining that the user of the viewing computer is authorized to access the selected device, determining (640) that the viewing computer used by the user is an authorized device according to the assigned access rights (430); and
based on the determining that the user of the viewing computer is authorized to access the selected device and the determining that the viewing computer used by the user is an authorized device, allowing (645) the viewing computer to access the selected device.

9. The method according to Claim 8 wherein the determining (620) that the user of the viewing computer is authorized to access the selected device further comprises authenticating an identity of the user of the viewing computer.

10. The method according to Claim 8 wherein access includes one of viewing content stored on the selected device, downloading content stored on the selected device, modifying content stored on the selected device, deleting content stored on the selected device, or adding content onto the selected device.

11. The method according to Claim 8 wherein access includes one of downloading applications stored on the selected device, modifying applications stored on the selected device, deleting applications stored on the selected device, or adding applications onto the selected device.

12. The method according to Claim 8 wherein the assigned access rights (430) limit access to the selected device based on a predetermined amount of time, and wherein the selected device is inaccessible to the viewing computer once the viewing computer has exceeded the predetermine amount of time.

13. The method according to Claim 8 wherein the assigned access rights (430) limit access to the selected device based on a predetermined number of times the selected device is accessed, and wherein the selected device is inaccessible to the viewing computer once the viewing computer has exceeded the predetermined number of times that are defined by the access rights for the selected device.

## Patentansprüche

1. System umfassend:
ein Profilmanager-Modul (310), welches konfiguriert ist, Profile einschließlich Geräteprofilen und Benutzerprofilen zu verfolgen, die zugewiesene Zugriffsrechte (420) beinhalten, die angeben, welche Art von Zugriff ein Benutzer auf die Geräte und autorisierten Geräte hat, die der Benutzer beim Zugriff auf ein entsprechendes Gerät verwenden kann;
ein Zugriffsmodul (360), welches konfiguriert ist, den Zugriff des Benutzers auf ein ausgewähltes Gerät unter Einsatz eines Betrachtungscomputers auf Basis der zugewiesenen Zugriffsrechte (420) für ein ausgewähltes Gerät selektiv zu steuern; und
ein Schnittstellenmodul (340), welches konfiguriert ist, eine Darstellung des ausgewählten Geräts zusammen mit einem Status des ausgewählten Geräts auf dem Betrachtungscomputer anzuzeigen,
wobei das Zugriffsmodul (360) ferner konfiguriert ist, den Zugriff durch den Betrachtungscomputer auf das ausgewählte Gerät einzuschränken, basierend auf einer Bestimmung, ob dem Benutzer des Betrachtungscomputers der Zugriff auf das ausgewählte Gerät erlaubt ist, und auf einer Bestimmung, ob der von dem Benutzer verwendete Betrachtungscomputer ein autorisiertes Gerät entsprechend den zugewiesenen Zugriffsrechten (420) ist.

2. System nach Anspruch 1, ferner umfassend ein Speichermodul (330), welches konfiguriert ist, das Profil zu speichern.

3. System nach Anspruch 1, ferner umfassend ein Gerätedetektiermodul (320), welches konfiguriert ist den Status des ausgewählten Geräts zu detektieren.

4. System nach Anspruch 1, wobei die zugewiesenen Zugriffsrechte (430) das Betrachten von auf dem ausgewählten Gerät gespeichertem Inhalt, das Downloaden von auf dem ausgewählten Gerät gespeichertem Inhalt, das Modifizieren von auf dem ausgewählten Gerät gespeicherten Inhalt, das Löschen von auf dem ausgewählten Gerät gespeicherten Inhalt und/oder das Hinzufügen von Inhalt auf das ausgewählte Gerät beinhalten.

5. System nach Anspruch 1, wobei die zugewiesenen Zugriffsrechte (430) das Downloaden von auf dem ausgewählten Gerät gespeicherten Anwendungen, das Modifizieren von auf dem ausgewählten Gerät gespeicherten Anwendungen, das Löschen von auf dem ausgewählten Gerät gespeicherten Anwendungen, und/oder das Hinzufügen von Anwendungen auf das ausgewählte Gerät beinhalten.

6. System nach Anspruch 1, wobei das Zugriffsmodul (360) konfiguriert ist, den Zugriff auf das ausgewählte Gerät auf Basis einer vorherbestimmten Zeitspanne zu begrenzen.

7. System nach Anspruch 1, wobei das Zugriffsmodul (360) konfiguriert ist, den Zugriff auf das ausgewählte Gerät auf Basis einer vorherbestimmten Anzahl von Zugriffen auf das Gerät zu begrenzen.

8. Verfahren umfassend:
Zugreifen (605) auf ein Profil eines Benutzers eines Betrachtungscomputers, um aufgrund des Profils eine Liste von Freunden des Benutzers des Betrachtungscomputers zu erhalten, und aufgrund des Profils eine Liste einer Mehrzahl von Computern zu erhalten, wobei jeder Computer aus der Liste der Mehrzahl von Computern ein Computer eines entsprechenden Freundes ist, der dem Benutzer des Betrachtungscomputers mindestens bestimmte Zugriffsrechte auf den Computer eingeräumt hat;
Anzeigen (610) der Liste einer Mehrzahl von aufgrund des Profils erhaltenen Geräten für den Benutzer des Betrachtungscomputers;
Empfangen (615) einer Auswahl eines ausgewählten Geräts aus der Liste der Mehrzahl von aufgrund des Benutzerprofils erhaltenen Geräten;
Zugreifen auf zugewiesene Zugriffsrechte (430) für das ausgewählte Gerät, wobei die zugewiesenen Zugriffsrechte eine Angabe der Benutzer beinhalten, denen der Zugriff auf das ausgewählte Gerät und die autorisierten Geräte, die der Benutzer verwenden kann, erlaubt ist;
Bestimmen (620), dass dem Benutzer des Betrachtungscomputers der Zugriff auf das ausgewählte Gerät erlaubt ist;
in Reaktion auf das Bestimmen, dass dem Benutzer des Betrachtungscomputers der Zugriff auf das ausgewählte Gerät erlaubt ist, Bestimmen (640), dass der von dem Benutzer benutzte Betrachtungscomputer ein autorisiertes Gerät entsprechend den zugewiesenen Zugriffsrechten (430) ist; und
basierend auf der Bestimmung, dass dem Benutzer des Betrachtungscomputers der Zugriff auf das ausgewählte Gerät erlaubt ist, und der Bestimmung, dass der von dem Benutzer eingesetzte Betrachtungscomputer ein autorisiertes Gerät ist, Erlauben (645) des Zugriffs durch den Betrachtungscomputer auf das ausgewählte Gerät.

9. Verfahren nach Anspruch 8, wobei das Bestimmen (620), dass dem Benutzer des Betrachtungscomputers der Zugriff auf das ausgewählte Gerät erlaubt ist, ferner das Authentifizieren einer Identität des Benutzers des Betrachtungscomputers umfasst.

10. Verfahren nach Anspruch 8, wobei der Zugriff das Betrachten von auf dem ausgewählten Gerät gespeichertem Inhalt, das Downloaden von auf dem ausgewählten Gerät gespeichertem Inhalt, das Modifizieren von auf dem ausgewählten Gerät gespeicherten Inhalt, das Löschen von auf dem ausgewählten Gerät gespeicherten Inhalt und/oder das Hinzufügen von Inhalt auf das ausgewählte Gerät beinhaltet.

11. Verfahren nach Anspruch 8, wobei der Zugriff das Downloaden von auf dem ausgewählten Gerät gespeicherten Anwendungen, das Modifizieren von auf dem ausgewählten Gerät gespeicherten Anwendungen, das Löschen von auf dem ausgewählten Gerät gespeicherten Anwendungen, und/oder das Hinzufügen von Anwendungen auf das ausgewählte Gerät beinhaltet.

12. Verfahren nach Anspruch 8, wobei die zugewiesenen Zugriffsrechte (430) den Zugriff auf das ausgewählte Gerät auf Basis einer vorherbestimmten Zeitspanne begrenzen, und wobei das ausgewählte Gerät für den Betrachtungscomputer nicht zugänglich ist, sobald dieser die vorherbestimmte Zeitspanne überschritten hat.

13. Verfahren nach Anspruch 8, wobei die zugewiesenen Zugriffsrechte (430) den Zugriff auf das ausgewählte Gerät auf Basis einer vorherbestimmten Anzahl von Zugriffen auf das ausgewählte Gerät begrenzen, und wobei das ausgewählte Gerät für den Betrachtungscomputer nicht zugänglich ist, sobald dieser die in den Zugriffsrechten definierte vorherbestimmte Anzahl von Zugriffen für das ausgewählte Gerät überschritten hat.

## Revendications

1. Système, comportant :
un module de gestion de profils (310) configuré à des fins de suivi de profils, comprenant des profils de dispositifs et des profils d'utilisateurs qui comprennent des droits d'accès alloués (420) qui indiquent de quel accès un utilisateur bénéficie par rapport aux dispositifs et les dispositifs autorisés que l'utilisateur peut utiliser quand il a accès à un dispositif respectif ;
un module d'accès (360) configuré à des fins de contrôle sélectif de l'accès à un dispositif sélectionné par un utilisateur utilisant un ordinateur de visualisation, en fonction des droits d'accès alloués (420) pour le dispositif sélectionné ; et
un module d'interface (340) configuré à des fins d'affichage d'une représentation du dispositif sélectionné avec un statut du dispositif sélectionné sur l'ordinateur de visualisation,
dans lequel le module d'accès (360) est également configuré à des fins de restriction de l'accès par l'ordinateur de visualisation au dispositif sélectionné en fonction d'une détermination comme quoi l'utilisateur de l'ordinateur de visualisation est autorisé à avoir accès au dispositif sélectionné et d'une détermination comme quoi l'ordinateur de visualisation utilisé par l'utilisateur est un dispositif autorisé selon les droits d'accès alloués (420) .

2. Système selon la revendication 1 comportant par ailleurs un module de stockage (330) configuré à des fins de stockage du profil.

3. Système selon la revendication 1 comportant par ailleurs un module de détection de dispositif (320) configuré à des fins de détection du statut du dispositif sélectionné.

4. Système selon la revendication 1 dans lequel les droits d'accès alloués (430) comprennent l'un parmi la visualisation de contenu stocké sur le dispositif sélectionné, le téléchargement de contenu stocké sur le dispositif sélectionné, la modification de contenu stocké sur le dispositif sélectionné, la suppression de contenu stocké sur le dispositif sélectionné, ou l'ajout de contenu sur le dispositif sélectionné.

5. Système selon la revendication 1 dans lequel les droits d'accès alloués (430) comprennent l'un parmi le téléchargement d'applications stockées sur le dispositif sélectionné, la modification d'applications stockées sur le dispositif sélectionné, la suppression d'applications stockées sur le dispositif sélectionné, ou l'ajout d'applications sur le dispositif sélectionné.

6. Système selon la revendication 1 dans lequel le module d'accès (360) est configuré à des fins de restriction de l'accès au dispositif sélectionné en fonction d'une durée de temps prédéterminée.

7. Système selon la revendication 1 dans lequel le module d'accès (360) est configuré à des fins de restriction de l'accès au dispositif sélectionné en fonction d'un nombre prédéterminé de fois pendant lesquelles le dispositif a été accédé.

8. Procédé comportant :
l'étape consistant à accéder (605) à un profil d'un utilisateur d'un ordinateur de visualisation pour obtenir à partir du profil une liste des amis de l'utilisateur de l'ordinateur de visualisation, et pour obtenir à partir du profil une liste d'une pluralité d'ordinateurs, chaque ordinateur de la liste de la pluralité d'ordinateurs étant un ordinateur d'un ami respectif qui a autorisé l'utilisateur de l'ordinateur de visualisation à avoir au moins un certain accès à l'ordinateur ;
l'étape consistant à afficher (610) la liste de la pluralité de dispositifs qui a été obtenue à partir du profil à l'attention de l'utilisateur de l'ordinateur de visualisation ;
l'étape consistant à recevoir (615) une sélection d'un dispositif sélectionné en provenance de la liste de la pluralité de dispositifs qui a été obtenue à partir du profil de l'utilisateur ;
l'étape consistant à accéder aux droits d'accès alloués (430) pour le dispositif sélectionné, dans lequel les droits d'accès alloués comprennent une indication des utilisateurs autorisés à avoir accès au dispositif sélectionné et des dispositifs autorisés que les utilisateurs peuvent utiliser ;
l'étape consistant à déterminer (620) que l'utilisateur de l'ordinateur de visualisation est autorisé à avoir accès au dispositif sélectionné ;
en réponse à l'étape consistant à déterminer que l'utilisateur de l'ordinateur de visualisation est autorisé à avoir accès au dispositif sélectionné, l'étape consistant à déterminer (640) que l'ordinateur de visualisation utilisé par l'utilisateur est un dispositif autorisé selon les droits d'accès alloués (430) ; et
en fonction de l'étape consistant à déterminer que l'utilisateur de l'ordinateur de visualisation est autorisé à avoir accès au dispositif sélectionné et de l'étape consistant à déterminer que l'ordinateur de visualisation utilisé par l'utilisateur est un dispositif autorisé, l'étape consistant à autoriser (645) l'ordinateur de visualisation à avoir accès au dispositif sélectionné.

9. Procédé selon la revendication 8 dans lequel l'étape consistant à déterminer (620) que l'utilisateur de l'ordinateur de visualisation est autorisé à avoir accès au dispositif sélectionné comporte par ailleurs l'étape consistant à authentifier une identité de l'utilisateur de l'ordinateur de visualisation.

10. Procédé selon la revendication 8 dans lequel l'accès comprend l'un parmi la visualisation de contenu stocké sur le dispositif sélectionné, le téléchargement de contenu stocké sur le dispositif sélectionné, la modification de contenu stocké sur le dispositif sélectionné, la suppression de contenu stocké sur le dispositif sélectionné, ou l'ajout de contenu sur le dispositif sélectionné.

11. Procédé selon la revendication 8 dans lequel l'accès comprend l'un parmi le téléchargement d'applications stockées sur le dispositif sélectionné, la modification d'applications stockées sur le dispositif sélectionné, la suppression d'applications stockées sur le dispositif sélectionné, ou l'ajout d'applications sur le dispositif sélectionné.

12. Procédé selon la revendication 8 dans lequel les droits d'accès alloués (430) limitent l'accès au dispositif sélectionné en fonction d'une durée de temps prédéterminée, et dans lequel le dispositif sélectionné est inaccessible à l'ordinateur de visualisation une fois que l'ordinateur de visualisation a dépassé la durée de temps prédéterminée.

13. Procédé selon la revendication 8 dans lequel les droits d'accès alloués (430) limitent l'accès au dispositif sélectionné en fonction d'un nombre prédéterminé de fois pendant lesquelles le dispositif sélectionné a été accédé, et dans lequel le dispositif sélectionné est inaccessible à l'ordinateur de visualisation une fois que l'ordinateur de visualisation a dépassé le nombre prédéterminé de fois qui sont définies par les droits d'accès pour le dispositif sélectionné.
